# EUROPEAN PATENT APPLICATION

(11) **EP 4 464 664 A2**
(43) Date of publication of application: **20.11.2024**
(21) Application number: 24152058.4
(22) Date of filing: 16.01.2024
(51) Int. Cl.: C01C 1/04, C25B 1/00, H01M 8/0606

(54) **SOEC-SOFC-HBR HYBRID SYSTEM FOR GREEN AMMONIA PRODUCTION**

(30) Priority: 17.05.2023 KR 20230063495; 09.11.2023 KR 20230154070
(71) Applicant: FCI Co., Ltd., Daejeon 34025 (KR)
(72) Inventor: LEE, Tae Won, Goyang-si, Gyeonggi-do (KR); CHANG, In Gab, Daejeon (KR); RYU, Bo Hyun, Daejeon (KR); JO, Seung Hwan, Ulsan (KR); WON, Myung Jun, Daejeon (KR)
(74) Representative: Isarpatent

(57) **Abstract**

Disclosed is an SOEC-SOFC-HBR hybrid system for green ammonia production, and more particularly an SOEC-SOFC-HBR hybrid system configured such that a solid oxide electrolysis cell (SOEC) is operated using electricity produced from renewable energy such as wind power or sunlight, intermittency of the renewable energy is complemented by a solid oxide fuel cell (SOFC), hydrogen produced by the solid oxide electrolysis cell (SOEC) and nitrogen provided by the solid oxide fuel cell (SOFC) are input to a Haber-Bosch reactor, and heat from the SOFC and the Haber-Bosch reactor is collected to efficiently and continuously produce green ammonia.

## Description

### BACKGROUND OF THE INVENTION

### Field of the Invention

The present invention relates to an SOEC-SOFC-HBR hybrid system for green ammonia production, and more particularly to an SOEC-SOFC-HBR hybrid system configured such that a solid oxide electrolysis cell (SOEC) is operated using electricity produced from a renewable energy source such as wind power or sunlight, intermittency of the renewable energy is complemented by a solid oxide fuel cell (SOFC), hydrogen produced by the solid oxide electrolysis cell (SOEC) and nitrogen provided by the solid oxide fuel cell (SOFC) are input to a Haber-Bosch reactor, and heat from the SOFC and the Haber-Bosch reactor is collected to efficiently and continuously produce green ammonia.

### Description of the Related Art

Green ammonia is produced through reaction between green hydrogen generated as the result of electrolysis of renewable energy and nitrogen captured from the atmosphere. Green ammonia contains no carbon, resulting in near-zero net emissions in terms of life cycle assessment.

Green ammonia is a synthetic fuel that can be converted into electricity and thermal energy; however, in recent years, the role of green ammonia as an energy carrier for storing and transporting green hydrogen produced through electrolysis of renewable energy in a liquid state has become more prominent. In particular, a new industry is emerging that produces ammonia, which is favorable for storage and transportation, without generation of carbon in regions rich in renewable energy, synthesizes green ammonia through Haber-Bosch reaction, and exports the synthesized green ammonia to regions such as Northeast Asia, North America, and Europe, where energy demand is high.

Hybrid technologies have been proposed to produce green ammonia by combining a renewable energy source such as wind power or sunlight with a solid oxide electrolysis cell (SOEC) and a Haber-Bosch reactor (HBR).

However, the conventional hybrid system has the following problems.

First, the amount of power generated by renewable energy is not constant due to intermittent power generation characteristics thereof, whereby it is difficult to stably operate the solid oxide electrolysis cell (SOEC).
In order to compensate for unstable power generation of renewable energy, therefore, an energy storage system (ESS) is further provided. In this case, however, huge expenditure is inevitable.

Second, a low-temperature electrolysis cell, which is a type of solid oxide electrolysis cell (SOEC), requires an operating temperature of 20 to 200°C, and a high-temperature electrolysis cell, which is another type of solid oxide electrolysis cell (SOEC), requires an operating temperature of 500 to 1000°C, which depends on the type. Therefore, a separate heat source and heat exchanger are required to operate the solid oxide electrolysis cell (SOEC). If fossil fuel is used to produce heat, however, the goal of carbon neutrality will be defeated.

Third, in order for the Haber-Bosch reactor (HBR) to produce ammonia, nitrogen is required in addition to hydrogen provided by the solid oxide electrolysis cell (SOEC). In order to supply nitrogen, therefore, a separate facility such as an air separation unit (ASU) must be further provided. However, a large amount of nitrous oxide (N₂O) is generated during operation of the air separation unit, which contradicts the eco-friendly goal of green ammonia production.

Fourth, oxygen as well as hydrogen is discharged as the result of operation of the solid oxide electrolysis cell (SOEC). A precision capture facility is required to utilize such by-product oxygen, which is another factor that increases system construction cost.

For reference, Korean Registered Patent Publication No. 10-2186440 (prior art document), which relates to an electrochemical ammonia synthesis method, discloses a technology for synthesizing green ammonia using an electrochemical method without the use of fossil fuel.

The prior art document appears to be an eco-friendly technology in that ammonia is produced using an electrochemical cell in which an anode unit and a cathode unit are separated by a cationic conductive membrane; however, the prior art document does not disclose which supply source provides nitrogen to be supplied to the electrochemical cell for ammonia synthesis or electricity necessary to operate the electrochemical cell. Consequently, the supply sources that provide nitrogen or electricity may cause carbon generation, and therefore the prior art document still has the aforementioned conventional problems.

### [Prior Art Document]

### [Patent Document]

Korean Registered Patent Publication No. 10-2186440 (2020.11.27)

### SUMMARY OF THE INVENTION

The present invention has been made in view of the above problems, and it is an object of the present invention to provide a plan to supply stable power to a solid oxide electrolysis cell (SOEC) in an SOEC-HBR hybrid system for green ammonia production.

It is another object of the present invention to provide a plan to generate and supply heat necessary to operate the solid oxide electrolysis cell (SOEC) in the SOEC-HBR hybrid system using an environmentally friendly method.

It is another object of the present invention to provide a plan to generate and supply nitrogen necessary for a Haber-Bosch reactor (HBR) in the SOEC-HBR hybrid system using an environmentally friendly method.

It is a further object of the present invention to provide a plan to recycle oxygen generated during operation of the solid oxide electrolysis cell (SOEC) so as to be usable in the system.

In accordance with the present invention, the above and other objects can be accomplished by the provision of an SOEC-SOFC-HBR hybrid system for green ammonia production, the SOEC-SOFC-HBR hybrid system including a solid oxide fuel cell (SOFC), a power compensator configured to adjust uniform supply power using a renewable energy source and the solid oxide fuel cell, a solid oxide electrolysis cell (SOEC) configured to produce hydrogen using the supply power adjusted by the power compensator, and a Haber-Bosch reactor configured to produce ammonia using the hydrogen produced by the solid oxide electrolysis cell and nitrogen provided by the solid oxide fuel cell.

In an embodiment, the solid oxide electrolysis cell may turn supply water into steam using heat provided by at least one of the Haber-Bosch reactor and the solid oxide fuel cell.

In an embodiment, at least some of oxygen input to an air electrode of the solid oxide fuel cell may be supplied from the solid oxide electrolysis cell.

In an embodiment, the solid oxide fuel cell may use ammonia as fuel, and at least some of the ammonia produced by the Haber-Bosch reactor may be reused as fuel of the solid oxide fuel cell.

In an embodiment, the SOEC-SOFC-HBR hybrid system may further include a controller configured to control an output of the solid oxide fuel cell in order to adjust the amount of ammonia produced by the Haber-Bosch reactor.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram of an SOEC-SOFC-HBR hybrid system according to a first embodiment of the present invention;
FIG. 2 is a block diagram of an SOEC-SOFC-HBR hybrid system according to a second embodiment of the present invention;
FIG. 3 is a block diagram of an SOEC-SOFC-HBR hybrid system according to a third embodiment of the present invention; and
FIG. 4 is a block diagram of an SOEC-SOFC-HBR hybrid system according to a fourth embodiment of the present invention.

### DETAILED DESCRIPTION OF THE INVENTION

Hereinafter, embodiments of the present invention will be described in detail with reference to the accompanying drawings. However, the present invention is not limited to a certain specific embodiment, and it should be understood that all transformations, equivalents, and substitutions including technical idea of the present invention are included in the scope of the present invention.

In this specification, a singular representation includes a plural representation unless it represents a definitely different meaning from the context.

When one element is referred to as "having", "comprising", or "including" another element in this specification, this means that other elements are not excluded but are further included, unless mentioned otherwise.

As used herein, the term "... unit", "... module", or "component" refers to a unit that performs at least one function or operation and may be implemented in hardware, software, or a combination of hardware and software.

When one element is referred to as being "connected to" another element in this specification, this may mean that the two elements are directly connected to each other; however, the present invention is not limited thereto, the two elements may be connected to each other via one or more other elements disposed therebetween.

### <First embodiment>

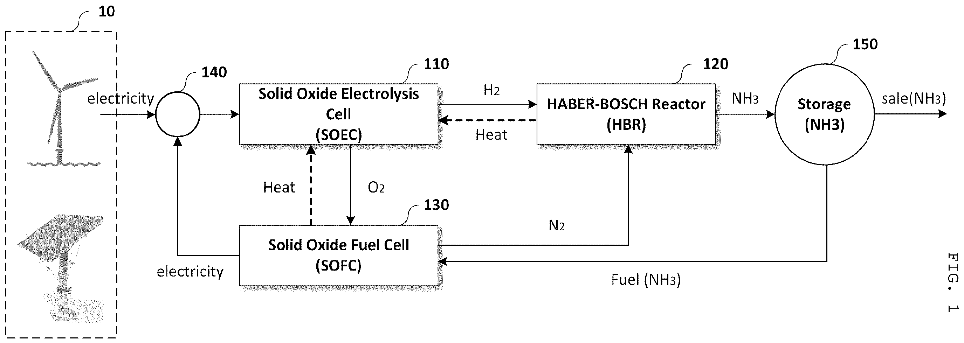

FIG. 1 is a block diagram of an SOEC-SOFC-HBR hybrid system according to a first embodiment of the present invention.

The SOEC-SOFC-HBR hybrid system according to the first embodiment includes a solid oxide electrolysis cell 110, a Haber-Bosch reactor 120, a solid oxide fuel cell 130, and a power compensator 140.

In FIG. 1, a renewable power source 10 collectively refers to power generation means that generate power from natural forces such as wind, sunlight, river water, ocean current, and solar heat. The renewable power source is environmentally friendly because the renewable power source generates very little carbon in a process of generating power, but has the disadvantage that it is difficult to maintain homeostasis in power output because the supply of natural forces is not constant.

In order to compensate for the above disadvantage, the present embodiment uses a solid oxide fuel cell 130 as an auxiliary means for stable supply of power. Specifically, when the power supplied by the renewable energy source 10 falls short of a predetermined threshold amount required by the hybrid system according to the present embodiment, the shortfall is supplemented by the power supplied by the solid oxide fuel cell 130 such that the solid oxide electrolysis cell 110 or the hybrid system according to the present embodiment including the same is always supplied with constant power.

Hereinafter, the elements constituting the SOEC-SOFC-HBR hybrid system according to the first embodiment will be described in detail.

The solid oxide electrolysis cell (SOEC) 110, which is a ceramic cell that uses a solid oxide capable of transmitting oxygen ions as an electrolyte, electrolyzes water to produce hydrogen and oxygen. The solid oxide electrolysis cell 110 receives energy for electrolysis from at least one of the renewable energy source 10 and the solid oxide fuel cell 130.

The solid oxide electrolysis cell 110 may be implemented by a high-temperature electrolysis cell, which requires heat of 500°C to 1000°C, among electrolysis cells.

High temperature electrolysis used by the high-temperature electrolysis cell uses a phenomenon that the amount of electrical energy necessary for water electrolysis decreases with increasing temperature. High temperature electrolysis enables high-efficiency water electrolysis with less electrical energy, and the high-temperature electrolysis cell has the same structure and principle as the solid oxide fuel cell, whereby bidirectional operation using a single solid oxide fuel cell or a single solid oxide electrolysis cell is possible. In addition, since the solid electrolyte is used, resistance to corrosion is high, and electrolyte replenishment is not necessary, whereby easy maintenance is achieved. However, a lot of heat is necessary to heat vapor to 700°C or higher.

Consequently, the solid oxide electrolysis cell 110 according to the first embodiment basically receives heat required to turn water into steam from the Haber-Bosch reactor 120, and receives supplemental heat from off-gas of the solid oxide fuel cell 130. Alternatively, the solid oxide electrolysis cell 110 according to the first embodiment may basically receive heat required to turn water into steam from off-gas of the solid oxide fuel cell 130, and may receive supplemental heat from the Haber-Bosch reactor 120.

The Haber-Bosch reactor (HBR) 120 produces ammonia using hydrogen produced by the solid oxide electrolysis cell 110 and nitrogen provided by the solid oxide fuel cell 130.

The Haber-Bosch reactor 120 is an apparatus that produces ammonia using a Haber-Bosch process, which is chemical reaction that reacts nitrogen gas (N₂) in the air with hydrogen gas (H₂) derived from natural gas or other sources to synthesize ammonia (NH₃).

For chemical reaction, a catalyst, such as iron or iron oxide, is required together with a small amount of another promoter, and chemical reaction occurs at high temperatures (>400°C) and high pressures (>200 Bar).

Since the Haber-Bosch reaction is an exothermic reaction, at least some of high-temperature heat generated by the Haber-Bosch reactor 120 may be collected by a heat exchanger (not shown), may be supplied to the solid oxide electrolysis cell 110, or may be utilized for other purposes.

The chemical formula of the Haber-Bosch process is as follows.

[Chemical Formula 1] N₂(g) + 3H₂(g) 2NH₃(g)

This process is an exothermic reaction which proceeds in a direction for ammonia synthesis while heat is discharged, whereby temperature is decreased.

As shown in Chemical Formula 1, nitrogen is required for chemical reaction of the Haber-Bosch process. Conventionally, a separate air separation unit (ASU) is provided to supply nitrogen to the Haber-Bosch reactor. In the first embodiment, however, nitrogen contained in off-gas of the solid oxide fuel cell 130 is supplied to the Haber-Bosch reactor 120, and therefore it is not necessary to provide a separate air separation unit in order to supply nitrogen, or only a minimum-capacity air separation unit is required to synthesize ammonia. Since the air separation unit is eliminated, it is possible to reduce facility construction cost and to reduce power used to operate the air separation unit.

Ammonia synthesized by the Haber-Bosch reactor 120 is stored in storage 150. At least some of the stored ammonia is fed back to the solid oxide fuel cell 130 so as to be used as fuel, and the remainder of the stored ammonia is sold through distribution channels.

For reference, it is possible to liquefy and transport hydrogen itself without synthesizing hydrogen into ammonia. Since the liquefaction condition of hydrogen is -253°C under atmospheric pressure and the liquefaction condition of ammonia is -33°C, less energy is required to liquefy ammonia than hydrogen. Therefore, liquefying ammonia is more advantageous than liquefying hydrogen, and is advantageous in terms of efficient storage and transportation of a large amount of green energy.

The solid oxide fuel cell (SOFC) 130, which is a fuel cell using an ionically conductive ceramic as an electrolyte, includes an oxygen ion conductive electrolyte and an air electrode (cathode) and a fuel electrode (anode) located at opposite sides thereof.

When air and hydrogen are supplied to the air electrode and the fuel electrode, respectively, oxygen ions are generated by reduction reaction of oxygen at the air electrode, move to the fuel electrode through the electrolyte, and react with hydrogen supplied to the fuel electrode to generate water. At this time, electrons are generated at the fuel electrode and electrons are consumed at the air electrode. When the two electrodes are connected to each other, therefore, current flows therebetween, whereby electricity is produced.

The solid oxide fuel cell 130 may use pure hydrogen as fuel, may use hydrogen obtained by reforming hydrocarbon fuel such as liquefied natural gas (LNG), liquefied propane gas (LPG), or methane gas, as fuel, or may use ammonia as fuel.

In an embodiment using ammonia as fuel, the solid oxide fuel cell 130 pyrolyzes the supplied ammonia to generate nitrogen and hydrogen. The generated hydrogen is used to produce electricity, and nitrogen contained in off-gas is supplied to the Haber-Bosch reactor 120. The solid oxide fuel cell 130 may receive some of ammonia generated by the Haber-Bosch reactor 120 as fuel, or may receive ammonia through a separate route other than the Haber-Bosch reactor 120.

In an embodiment using pure hydrogen or hydrogen produced by reforming as fuel, off-gas of the solid oxide fuel cell 130 contains the entirety of nitrogen contained in outside air without being involved in chemical reaction in a stack, and nitrogen contained in the off-gas of the solid oxide fuel cell 130 is supplied to the Haber-Bosch reactor 120.

The solid oxide fuel cell 130 supplies at least some of high-temperature heat contained in off-gas of the stack to the solid oxide electrolysis cell 110 via a heat exchanger (not shown).

The air electrode of the stack included in the solid oxide fuel cell 130 may receive oxygen from outside air AIR, or may receive at least some of oxygen obtained through electrolysis of water in the solid oxide electrolysis cell 110.

In an embodiment, the air electrode of the solid oxide fuel cell 130 preferentially receives oxygen from the solid oxide electrolysis cell 110, and may receive supplemental oxygen from outside air. Alternatively, in another embodiment, the air electrode of the solid oxide fuel cell 130 may preferentially receive oxygen from the outside air, and may receive supplemental oxygen from the solid oxide electrolysis cell 110.

Power generated by the solid oxide fuel cell 130 may be supplied or sold externally, or may be utilized as local power for a green ammonia hybrid plant.

The power compensator 140 adjusts the supply of power from the renewable energy source 10 or the solid oxide fuel cell 130 to facilitate electrolysis by the solid oxide electrolysis cell 110. In an embodiment, the power compensator 140 controls the output of the solid oxide fuel cell 130 such that the supply of power to the solid oxide electrolysis cell 110 is constant in the state in which the renewable energy source 10 is preferentially used as a power source.

As a specific operation example, the power compensator 140 senses the amount of power supplied from the renewable energy source 10 to the solid oxide electrolysis cell 110 and, if the amount of power supplied from the renewable energy source 10 falls short of the amount of power required by the solid oxide electrolysis cell 110, controls the solid oxide fuel cell 130 to make up the shortfall with electricity produced by the solid oxide fuel cell 130. In this sense, the power compensator 140 may be considered a controller (not shown) of the solid oxide fuel cell 130.

Since the hybrid system according to the first embodiment can be stably operated due to complementary supply of power from the renewable energy source and the solid oxide fuel cell, therefore, a separate energy storage system (ESS) configured to compensate for intermittency of renewable energy is not required, or only a minimum-capacity energy storage system is required, whereby it is possible to drastically reduce system construction cost.

### <Second embodiment>

A second embodiment relates to the case in which heat required for water evaporation in a solid oxide electrolysis cell is supplied only from a Haber-Bosch reactor, compared to the first embodiment.

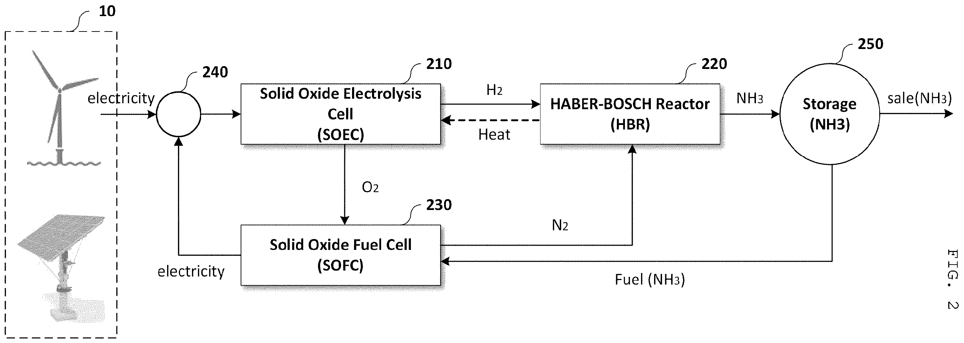

FIG. 2 is a block diagram of an SOEC-SOFC-HBR hybrid system according to a second embodiment of the present invention.

The SOEC-SOFC-HBR hybrid system according to the second embodiment includes a solid oxide electrolysis cell 210, a Haber-Bosch reactor 220, a solid oxide fuel cell 230, and a power compensator 240.

The solid oxide electrolysis cell 210, the Haber-Bosch reactor 220, and the power compensator 240 of the second embodiment are identical in technical configuration to the solid oxide electrolysis cell 110, the Haber-Bosch reactor 120, and the power compensator 140 of the first embodiment, and therefore a duplicate description will be omitted.

The solid oxide fuel cell 230 is identical in technical configuration to the solid oxide fuel cell 130 of the first embodiment except that the solid oxide fuel cell 230 does not supply heat generated in a stack thereof to the solid oxide electrolysis cell 210.

If heat supplied by the Haber-Bosch reactor 220 is sufficient for steam generation in the solid oxide electrolysis cell 210, heat discharged from the solid oxide fuel cell 230 may be utilized for other purposes needed by the system.

### <Third embodiment>

A third embodiment relates to the case in which oxygen required by an air electrode of a solid oxide fuel cell is supplied only from outside air AIR, compared to the first embodiment.

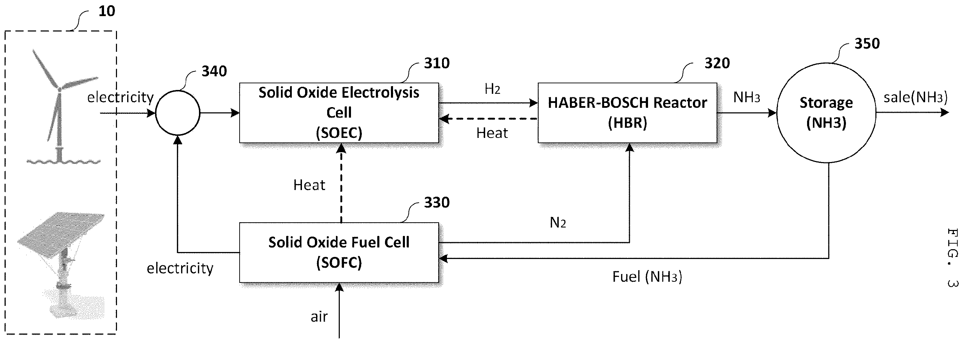

FIG. 3 is a block diagram of an SOEC-SOFC-HBR hybrid system according to a third embodiment of the present invention.

The SOEC-SOFC-HBR hybrid system according to the third embodiment includes a solid oxide electrolysis cell 310, a Haber-Bosch reactor 320, a solid oxide fuel cell 330, and a power compensator 340.

The Haber-Bosch reactor 320 and the power compensator 340 of the third embodiment are identical in technical configuration to the Haber-Bosch reactor 120 and the power compensator 140 of the first embodiment, and therefore a duplicate description will be omitted.

The solid oxide electrolysis cell 310 is identical in technical configuration to the solid oxide electrolysis cell 110 of the first embodiment except that the solid oxide electrolysis cell 310 does not supply oxygen produced by electrolysis to the solid oxide fuel cell 330.

In addition, the solid oxide fuel cell 330 is identical in technical configuration to the solid oxide fuel cell 130 of the first embodiment except that the solid oxide fuel cell 330 receives oxygen required by an air electrode thereof only from outside air AIR.

The solid oxide electrolysis cell 310 may supply the produced oxygen to a burner (not shown) of the system, may store the produced oxygen in an external storage tank, or may utilize the produced oxygen for other purposes.

### <Fourth embodiment>

A fourth embodiment relates to the case in which hydrogen is used as fuel of a solid oxide fuel cell and ammonia synthesized by a Haber-Bosch reactor is used for other purposes, such as full sale, compared to the first embodiment.

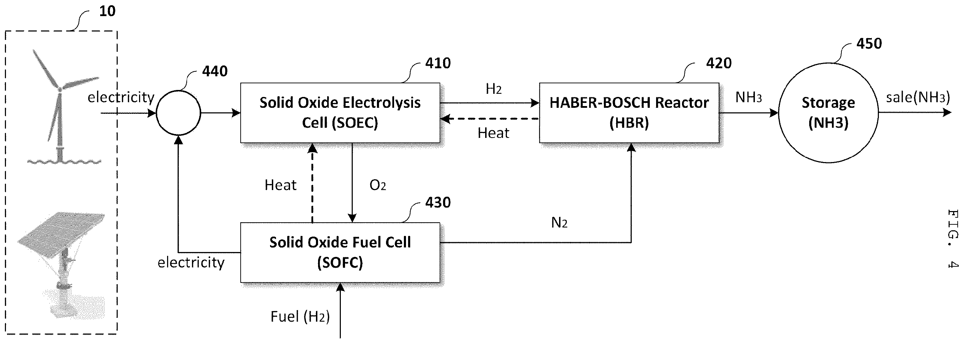

FIG. 4 is a block diagram of an SOEC-SOFC-HBR hybrid system according to a fourth embodiment of the present invention.

The SOEC-SOFC-HBR hybrid system according to the fourth embodiment includes a solid oxide electrolysis cell 410, a Haber-Bosch reactor 420, a solid oxide fuel cell 430, and a power compensator 440.

The solid oxide electrolysis cell 410, the Haber-Bosch reactor 420, and the power compensator 440 of the fourth embodiment are identical in technical configuration to the solid oxide electrolysis cell 110, the Haber-Bosch reactor 120, and the power compensator 140 of the first embodiment, and therefore a duplicate description will be omitted.

The solid oxide fuel cell 430 uses hydrogen as fuel, wherein pure hydrogen may be used or hydrogen reformed from hydrocarbon may be used. The solid oxide fuel cell 430 is identical in other technical configuration to the solid oxide fuel cell 130 of the first embodiment

A modification for regulating the amount of ammonia produced by the hybrid system may be derived from each of the first to fourth embodiments described above.

That is, in order to adjust the amount of ammonia synthesized by the Haber-Bosch reactor 120, 220, 320, or 420, it is necessary to adjust the amount of hydrogen supplied by the solid oxide electrolysis cell 110, 210, 310, or 410 or to adjust the amount of nitrogen supplied by the solid oxide fuel cell 130, 230, 330, or 430.

To this end, in an embodiment, the power compensator 140, 240, 340, or 440 may further have a function to adjust the amount of power supplied to the solid oxide electrolysis cell 110, 210, 310, or 410 in addition to a function to maintain a constant amount of power. It is possible to decrease or increase the amount of hydrogen generated by the solid oxide electrolysis cell 110, 210, 310, or 410 by adjusting the amount of power supplied to the solid oxide electrolysis cell.

In another embodiment, the controller of the solid oxide fuel cell 130, 230, 330, or 430 may adjust the amount of power generated by the fuel cell to decrease or increase the amount of nitrogen supplied to the solid oxide electrolysis cell 110, 210, 310, or 410.

As is apparent from the above description, according to an embodiment of the present invention, it is possible to provide constant and stable power to a solid oxide electrolysis cell (SOEC) when renewable energy is used to operate a green ammonia production system based on the solid oxide electrolysis cell (SOEC) and a Haber-Bosch reactor (HBR).

According to an embodiment of the invention, it is possible to generate and supply heat necessary to operate the solid oxide electrolysis cell (SOEC) in the green ammonia production system based on the solid oxide electrolysis cell (SOEC) and the Haber-Bosch reactor (HBR) in an environmentally friendly manner.

According to an embodiment of the invention, it is possible to generate and supply nitrogen necessary for the Haber-Bosch reactor (HBR) in the green ammonia production system based on the solid oxide electrolysis cell (SOEC) and the Haber-Bosch reactor (HBR) in an environmentally friendly manner.

According to an embodiment of the invention, it is possible to recycle oxygen generated during operation of the green ammonia production system based on the solid oxide electrolysis cell (SOEC) and the Haber-Bosch reactor (HBR) so as to be usable in the system.

Although the present invention has been described with reference to the embodiments, it will be apparent to those skilled in the art that various modifications and variations can be made in the present invention without departing from the idea and category of the present invention defined by the appended claims.

## Claims

1. An SOEC-SOFC-HBR hybrid system for green ammonia production, the SOEC-SOFC-HBR hybrid system comprising:
a solid oxide fuel cell (SOFC);
a power compensator configured to adjust uniform supply power using a renewable energy source and the solid oxide fuel cell;
a solid oxide electrolysis cell (SOEC) configured to produce hydrogen using the supply power adjusted by the power compensator; and
a Haber-Bosch reactor configured to produce ammonia using the hydrogen produced by the solid oxide electrolysis cell and nitrogen provided by the solid oxide fuel cell.

2. The SOEC-SOFC-HBR hybrid system according to claim 1, wherein the solid oxide electrolysis cell turns supply water into steam using heat provided by at least one of the Haber-Bosch reactor and the solid oxide fuel cell.

3. The SOEC-SOFC-HBR hybrid system according to claim 1, wherein at least some of oxygen input to an air electrode of the solid oxide fuel cell is supplied from the solid oxide electrolysis cell.

4. The SOEC-SOFC-HBR hybrid system according to claim 1, wherein
the solid oxide fuel cell uses ammonia as fuel, and
at least some of the ammonia produced by the Haber-Bosch reactor is reused as fuel of the solid oxide fuel cell.

5. The SOEC-SOFC-HBR hybrid system according to claim 1, further comprising a controller configured to control an output of the solid oxide fuel cell in order to adjust the amount of ammonia produced by the Haber-Bosch reactor.
